# EUROPÄISCHE PATENTSCHRIFT

(11) **EP 3 038 850 B1**
(45) Veröffentlichungstag und Bekanntmachung des Hinweises auf die Patenterteilung: **04.10.2017**
(21) Anmeldenummer: 14755030.5
(22) Anmeldetag: 22.08.2014
(51) Int. Cl.: B60K 6/46, B60W 10/06, B60W 10/08, B60L 11/12, B60L 11/18, B60W 10/26, B63H 21/20, B60W 20/13

(54) **SYSTEMSTEUERUNG UND VERFAHREN ZUM STEUERN EINES LADESYSTEMS, DAS ZUM LADEN EINES ELEKTRISCHEN ENERGIESPEICHERS VORGESEHEN IST, SOWIE LADESYSTEM UND FAHRZEUG**
SYSTEM CONTROLLER AND METHOD FOR CONTROLLING A CHARGING SYSTEM, WHICH CHARGING SYSTEM IS PROVIDED FOR CHARGING AN ELECTRICAL ENERGY STORE, CHARGING SYSTEM, AND VEHICLE
COMMANDE DE SYSTÈME ET PROCÉDÉ DE COMMANDE D'UN SYSTÈME DE CHARGE SERVANT À CHARGER UN ACCUMULATEUR D'ÉNERGIE ÉLECTRIQUE, AINSI QUE SYSTÈME DE CHARGE ET VÉHICULE

(30) Priorität: 27.08.2013 DE 102013014085
(43) Veröffentlichungstag der Anmeldung: 06.07.2016
(73) Patentinhaber: MTU Friedrichshafen GmbH, 88045 Friedrichshafen (DE)
(72) Erfinder: OSTERLOFF, Eckhard, 88085 Langenargen (DE); ROSCHER, Martin, 88048 Friedrichshafen (DE); VON DRATHEN, Arndt, 88045 Friedrichshafen (DE); DROULLIER, Gerhard, 88677 Markdorf (DE)
(86) Internationale Anmeldenummer: PCT/EP2014/002311
(87) Internationale Veröffentlichungsnummer: WO 2015/028133

(56) Entgegenhaltungen:
- EP-A1- 0 556 942
- EP-A2- 0 864 457
- EP-A2- 2 033 837
- US-A1- 2005 173 169

## Beschreibung

Die vorliegende Erfindung betrifft eine Systemsteuerung und ein Verfahren zum Steuern eines Ladesystems, das zum Laden eines elektrischen Energiespeichers vorgesehen ist. Das Ladesystem weist einen elektrischen Generator und einen Verbrennungsmotor auf, der mechanisch mit dem Generator verbunden ist. Die vorliegende Erfindung betrifft des Weiteren ein Ladesystem zum Laden eines elektrischen Energiespeichers, das eine Systemsteuerung zum Steuern des Ladesystems aufweist, sowie ein Fahrzeug, insbesondere ein Wasserfahrzeug, das einen elektrischen Energiespeicher und ein Ladesystem zum Laden des elektrischen Energiespeichers enthält.

Es ist ein Fahrzeug, insbesondere ein Wasserfahrzeug, wie z. B. ein U-Boot, allgemein bekannt, das einen elektrischen Energiespeicher, wie z. B. eine Batterie, aufweist. In dem elektrischen Energiespeicher abgespeicherte Energie dient dazu, verschiedene elektrische Verbraucher des Fahrzeugs mit Strom zu versorgen. Unter anderem wird der Energiespeicher dazu eingesetzt, einen elektrischen Motor mit elektrischem Strom zu versorgen, um das Fahrzeug mittels des elektrischen Motors anzutreiben. Da der Energiespeicher durch seine Benutzung laufend Energie abgibt und dabei entleert wird, ist ein Ladesystem zum Laden dieses elektrischen Energiespeichers erforderlich. Mit diesem Ladesystem wird elektrische Energie erzeugt, die dann im Energiespeicher abgespeichert wird. Der Energiespeicher wird dann geladen.

Ein bekanntes Ladesystem enthält einen Verbrennungsmotor, in dem fossiler Kraftstoff, wie z. B. Diesel, verbrannt wird, um an einer Abtriebswelle des Verbrennungsmotors ein Drehmoment zu erzeugen. Mit der Abtriebswelle des Verbrennungsmotors ist ein elektrischer Generator mechanisch verbunden. Der Generator dient zum Umwandeln der von dem Verbrennungsmotor erzeugten und auf den Generator übertragenen mechanischen Energie in elektrische Energie. Die von dem Generator erzeugte elektrische Energie wird dann zum Abspeichern in den elektrischen Energiespeicher eingespeist.

Üblicherweise ist für den Verbrennungsmotor eine Nennleistung so definiert, dass der Verbrennungsmotor in der Lage ist, die Nennleistung als höchste Leistung dauerhaft abzugeben und dabei eine lange Lebensdauer des Verbrennungsmotors zu gewährleisten. Die Nennleistung wird einmalig für bestimmte "worst-case" Bedingungen festgelegt, die im ungünstigsten Fall beim Betreiben des Verbrennungsmotors vorliegen können. Damit kann für eine konkrete Anwendung, in der der Verbrennungsmotor eingesetzt wird, unter allen zu erwartenden Umständen ein sicherer Betrieb des Ladesystems erreicht werden. Eine solche "worst-case" Bedingung ist beispielsweise die ungünstigste Temperatur einer Kühlflüssigkeit, die zum Kühlen des Verbrennungsmotors verwendet wird. Eine Generatorsteuerung, die zum Steuern des Generators dient, erhält von einer Ladesteuerung des Energiespeichers eine Ladevorgabeinformation mit einer Ladevorgabe für eine von dem Generator zu liefernden Ausgangsgröße. Eine solche Ausgangsgröße ist insbesondere eine Ausgangsspannung, ein Ausgangsstrom oder eine Ausgangsleistung des Generators. Die Generatorsteuerung fordert von dem Verbrennungsmotor eine solche Ausgangsleistung, dass der Generator die von der Ladesteuerung geforderten Ladevorgabe erfüllen kann. Allerdings ist der Verbrennungsmotor so eingestellt, dass er eine höhere Leistung als die Nennleistung auch dann nicht abgibt, wenn von der Generatorsteuerung eine höhere Leistung gefordert wird. In einem solchen Fall erhält der Generator somit die geforderte Ausgangsleistung des Verbrennungsmotors nicht und kann die Ladevorgabe der Ladesteuerung selbst nicht erfüllen. Das Ladesystem ist somit betreffend seine Leistungsfähigkeit wenig flexibel.

Aus der US 2005/173169 A1 ist ein Hybridantrieb für ein Fahrzeug bekannt. Der Hybridantrieb weist einen Verbrennungsmotor, einen Generator und einen Energiespeicher auf. Eine Steuereinrichtung CPU ist mit einer Motorsteuerung zum Steuern des Verbrennungsmotors und mit einer Generatorsteuerung zum Steuern des Generators verbunden. Die Motorsteuerung und die Generatorsteuerung erhalten von der Steuereinrichtung CPU Steuersignale zum Betreiben des Hybridantriebs.

Ähnliche Anordnungen sind aus der EP 0556942 A1 und der EP 0864457 A2 bekannt. Darin werden Fahrzeuge beschrieben, die jeweils einen Verbrennungsmotor, einen Generator und einen Elektromotor aufweisen. Elektronische Steuerungen steuern die Funktionen der Fahrzeuge, insbesondere das Einstellen der jeweils gewünschten Antriebsleistung.

Es ist die Aufgabe der vorliegenden Erfindung, einen flexiblen Betrieb eines Ladesystems, das zum Laden eines elektrischen Energiespeichers vorgesehen ist und einen elektrischen Generator und einen Verbrennungsmotor aufweist, zu ermöglichen.

Diese Aufgabe wird gemäß der technischen Lehre des Anspruchs 1, des Anspruchs 6, des Anspruchs 7 oder des Anspruchs 9 gelöst. Vorteilhafte Ausgestaltungen der Erfindung ergeben sich aus den abhängigen Ansprüchen.

Erfindungsgemäß wird eine Systemsteuerung zum Steuern eines Ladesystems vorgeschlagen, die eine Generatorsteuerung zum Steuern des Generators und eine Motorsteuerung zum Steuern des Verbrennungsmotors aufweist. Ferner enthält die Systemsteuerung eine Übertragungseinrichtung zum Übertragen von Nachrichten. Die Motorsteuerung ist mittels der Übertragungseinrichtung mit der Generatorsteuerung verbunden. Des Weiteren ist die Motorsteuerung so ausgestaltet, dass eine Nachricht erzeugbar ist, die eine Angabe über einen Betriebszustand des Verbrennungsmotors enthält. Diese Nachricht ist der Generatorsteuerung über die Übertragungseinrichtung zusendbar. Die Motorsteuerung ist so ausgestaltet, dass eine abgebbare Maximalleistung des Verbrennungsmotors in Abhängigkeit von wenigstens einem vorgegebenen Parameter veränderlich festlegbar ist. Dabei hängt die Angabe über den Betriebszustand des Verbrennungsmotors von dieser Maximalleistung des Verbrennungsmotors ab. Ferner ist die Motorsteuerung so ausgestaltet, dass die Maximalleistung des Verbrennungsmotors in Abhängigkeit von dem wenigstens einen vorgegebenen Parameter so festlegbar ist, dass sie größer ist als eine für den Verbrennungsmotor festgelegte Nennleistung.

Ein erfindungsgemäßes Ladesystem zum Laden eines elektrischen Energiespeichers weist einen elektrischen Generator und einen Verbrennungsmotor auf, der mechanisch mit dem Generator verbunden ist. Ferner enthält es eine erfindungsgemäße Systemsteuerung.

Ein erfindungsgemäßes Fahrzeug weist einen elektrischen Energiespeicher und ein erfindungsgemäßes Ladesystem auf.

Bei dem erfindungsgemäßen Verfahren erfolgt das Steuern eines Ladesystems, indem ein Generator mittels einer Generatorsteuerung gesteuert wird. Ein Verbrennungsmotor wird mittels einer Motorsteuerung gesteuert. Von der Motorsteuerung wird eine Nachricht erzeugt, die eine Angabe über einen Betriebszustand des Verbrennungsmotors enthält. Diese Nachricht wird der Generatorsteuerung über eine Übertragungseinrichtung zum Übertragen von Nachrichten, die die Motorsteuerung mit der Generatorsteuerung verbindet, zugesendet. Die Motorsteuerung legt eine abgebbare Maximalleistung des Verbrennungsmotors in Abhängigkeit von wenigstens einem vorgegebenen Parameter veränderlich fest. Die Angabe über den Betriebszustand des Verbrennungsmotors hängt dabei von dieser Maximalleistung des Verbrennungsmotors ab. Die Motorsteuerung ist des Weiteren so ausgestaltet, dass die Maximalleistung des Verbrennungsmotors in Abhängigkeit von dem wenigstens einen vorgegebenen Parameter so festlegbar ist, dass sie größer ist, als eine für den Verbrennungsmotor festgelegte Nennleistung.

Aufgrund der vorliegenden Erfindung ist es vorteilhafterweise möglich, dass die Motorsteuerung mit der Generatorsteuerung kommuniziert. Die Übermittlung der Angabe über den Betriebszustand des Verbrennungsmotors an die Generatorsteuerung ermöglicht es dieser vorteilhafterweise, die Angabe bei der Steuerung des Generators zu berücksichtigen. Insbesondere kann der Betrieb des Generators besonders gut an Anforderungen des Energiespeichers angepasst werden. Abhängig von dem Betriebszustand des Verbrennungsmotors kann beispielsweise eine Zeitdauer, die das Ladesystem zum Laden des elektrischen Energiespeichers benötigt, eine Ausgangsleistung, eine Ausgangsspannung und/oder ein Ausgangsstrom des Ladesystems eingestellt werden. Dadurch kann vorteilhafterweise eine hohe Flexibilität des Einsatzes des Fahrzeugs erreicht werden. Die Angabe über den Betriebszustand des Verbrennungsmotors ist insbesondere eine Angabe über einen technischen Betriebszustand, besonders vorteilhaft über einen aktuellen Leistungszustand des Verbrennungsmotors. Der Begriff Übertragungseinrichtung umfasst hier vorteilhafterweise jegliche Ausführungsform einer Einrichtung, mit der Nachrichten, d. h. insbesondere Informationen, zwischen der Motorsteuerung und der Generatorsteuerung übertragen werden können. Beispielsweise ist die Übertragungseinrichtung ein Bus, ein Netzwerk oder eine Leitung zum Übertragen von Signalen. Die Nachrichten können beispielsweise in Form von elektrischen Signalen über die Übertragungseinrichtung übertragen werden. Die Systemsteuerung und ihre Komponenten, insbesondere die Motorsteuerung, sind vorteilhafterweise so ausgestaltet, dass sie ihre Funktionalitäten im Betrieb des Ladesystems ausführen. Vorzugsweise ist das Ladesystem so aufgebaut, dass eine Abtriebswelle des Verbrennungsmotors mechanisch mit dem Generator verbunden ist. Dabei ist der Generator vorteilhafterweise eine elektrische Synchronmaschine, deren Läufer mit der Abtriebswelle verbunden ist. Besonders vorteilhaft ist der Verbrennungsmotor ein Dieselmotor. Das Fahrzeug ist insbesondere ein Wasserfahrzeug. Besonders vorteilhaft ist das Fahrzeug ein U-Boot.

Dadurch, dass die Maximalleistung des Verbrennungsmotors veränderlich ist, kann die Flexibilität des Einsatzes und des Betriebs des Ladesystems vorteilhafterweise weiter erhöht werden. Vorzugsweise enthalten die vorgegebenen Parameter Umweltparameter oder Umweltbedingungen für den Betrieb des Ladesystems oder einer seiner Komponenten.

Die Nennleistung ist hier insbesondere eine solche Leistung, die der Verbrennungsmotor als höchste Leistung dauerhaft abgeben kann und dabei eine lange Lebensdauer des Verbrennungsmotors gewährleistet ist. Die Nennleistung ist vorteilhafterweise für eine konkrete Anwendung des Verbrennungsmotors festgelegt. Für diese konkrete Anwendung insbesondere mit ihren konkreten Umweltbedingungen ist die Nennleistung insbesondere so festgelegt, dass der Verbrennungsmotor die Nennleistung auch unter sehr ungünstigen Bedingungen dauerhaft abgeben kann. Aufgrund dieser Ausgestaltung der Erfindung kann die Maximalleistung vorteilhafterweise abhängig von bestimmten Umweltbedingungen oder-parametern abweichend von der Nennleistung festgelegt werden. Dies ermöglicht bei guten Umweltbedingungen das Festlegen einer Maximalleistung, die größer ist als die Nennleistung. Dadurch

kann die maximale Ausgangsgröße, beispielsweise die maximale Ausgangsspannung, des Generators ebenfalls erhöht werden, was insbesondere ein schnelleres Laden des elektrischen Energiespeichers ermöglicht. Bei schlechten Umweltbedingungen ist das Festlegen einer solchen Maximalleistung möglich, die kleiner ist als die Nennleistung. Dadurch wird die maximale Ausgangsgröße des Generators, insbesondere dessen maximale Ausgangsspannung, auf ein entsprechend niedrigeres Niveau begrenzt. Dabei ist es allerdings möglich, den Betrieb des Ladesystems trotz der schlechten Bedingungen weiterhin aufrecht zu erhalten, wenn auch mit geringerer Leistungsfähigkeit. Dies gewährleistet vorteilhafterweise eine gute Ausfallsicherheit des Ladesystems.

In einer besonders vorteilhaften Ausführung ist die Systemsteuerung, insbesondere die Motorsteuerung, so ausgestaltet, dass die Maximalleistung für eine vorgegebene Zeitdauer größer als die Nennleistung festlegbar ist. Besonders vorteilhaft ist die Maximalleistung für einen vorgegebenen zeitlichen Anteil der vorgesehenen Betriebsdauer des Verbrennungsmotors festlegbar. Dieser zeitliche Anteil der vorgesehenen Betriebsdauer liegt vorzugsweise zwischen 5% und 20% der Betriebsdauer, insbesondere bei etwa 10%. Dadurch kann vorteilhafterweise gewährleistet werden, dass eine Überlastung des Verbrennungsmotors vermieden wird und übliche Wartungsintervalle eingehalten werden.

In einer weiteren vorteilhaften Ausgestaltung weist die Systemsteuerung eine Schnittstelle zum Empfangen von externen Steuerungsvorgaben auf. Ferner umfasst der wenigstens eine vorgegebene Parameter ein Anforderungssignal zum Anfordern der Maximalleistung des Verbrennungsmotors. Die Systemsteuerung ist des Weiteren so ausgestaltet, dass das Anforderungssignal aufgrund einer von ihr empfangenen Steuerungsvorgabe erzeugbar ist. Dazu enthält die Systemsteuerung vorteilhafterweise eine Empfangsschnittstelle zum Empfangen eines Eingangssignals, das eine solche Steuerungsvorgabe aufweist. Die Steuerungsvorgabe ist insbesondere eine Vorgabe eines externen Bedieners der Systemsteuerung. Aufgrund dieser Ausgestaltung kann auf besonders einfache Weise die festgelegte Maximalleistung des Verbrennungsmotors abgerufen werden. Externe Steuerungsvorgaben können insbesondere in Form von Eingangssignalen der Systemsteuerung zugeleitet werden. Diese Eingangssignale werden dann an der Schnittstelle empfangen und von dort insbesondere an die Motorsteuerung und/oder Generatorsteuerung weitergeleitet. Einfachheitshalber hat die Schnittstelle eine Betätigungseinrichtung, wie z. B. eine Taste einer Tastatur, die von dem externen Bediener betätigbar ist. Bei Betätigen der Betätigungseinrichtung erzeugt die Systemsteuerung das Anforderungssignal. Die Schnittstelle ist des Weiteren zum Empfangen von Eingangssignalen mit einer Kommunikationseinrichtung zum Übertragen von Signalen, insbesondere einem Netzwerk, verbunden. Über die Kommunikationseinrichtung können der Systemsteuerung somit vorteilhafterweise Steuerungsvorgaben zugeleitet werden. Dadurch ist eine Fernsteuerung der Systemsteuerung möglich.

Besonders vorteilhaft ist die Angabe über den Betriebszustand des Verbrennungsmotors von wenigstens einer der folgenden Größen abhängig: einer Lufttemperatur von zum Betreiben des Verbrennungsmotors angesaugter Luft; einer Wassertemperatur von zum Kühlen des Verbrennungsmotors eingesetztem Kühlwasser; einem Abgasgegendruck, der beim Ausgeben von Abgas auftritt, das beim Betreiben des Verbrennungsmotors entsteht; einem Ansaugunterdruck, der beim Ansaugen von Luft auftritt. Die genannten Größen stellen insbesondere Umweltbedingungen oder -parameter dar. Mittels der genannten Größen kann das Ladesystem besonders effizient arbeiten, insbesondere den elektrischen Energiespeicher laden. Es ist vorteilhafterweise möglich, die Leistungsfähigkeit des Verbrennungsmotors und/oder des Generators zu optimieren und gleichzeitig eine Überlastung dieser Komponenten zu vermeiden. Dies gilt insbesondere für den Fall, dass das Fahrzeug ein Wasserfahrzeug, insbesondere ein U-Boot ist. Die Wassertemperatur ist dann vorteilhafterweise die Wassertemperatur von Seewasser, in dem sich das Wasserfahrzeug befindet. Im Falle eines U-Boots als Fahrzeug ist der Abgasgegendruck eine wesentliche Größe, da dieser unter Wasser besonders hoch ist. Gegen den Abgasgegendruck müssen Abgase vom Fahrzeug nach außen ausgegeben werden. Dabei gilt insbesondere, dass umso mehr Abgase gegen den Abgasgegendruck nach außen gegeben werden müssen, je höher die Leistung ist, die vom Verbrennungsmotor abgegeben wird. Je nach Einsatz kann der Abgasgegendruck sehr hoch sein. Ferner ist es möglich, dass der Abgasgegendruck, beispielsweise durch unterschiedlich hohe Wellen stark variiert. Dies stellt entsprechend große Anforderungen, insbesondere an den Verbrennungsmotor und die Motorsteuerung. Ein hoher Abgasgegendruck kann auch bei Einsatz einer Abgasnachbehandlung auftreten. Insbesondere bei kleinen Leitungsquerschnitten kann der Abgasgegendruck relevant sein. Der Ansaugunterdruck ist ebenfalls insbesondere dann wichtig, wenn das Fahrzeug ein U-Boot ist. Das U-Boot weist üblicherweise einen Schnorchel auf, über den Luft angesaugt wird. Wenn der Schnorchel beim Betrieb des U-Boots unter Wasser gehen sollte, schließt er kurzzeitig, wodurch der Ansaugunterdruck ansteigt. Dieser ist für den Betrieb, insbesondere die Leistungsfähigkeit, des Verbrennungsmotors nachteilig. Die Motorsteuerung ist vorteilhafterweise so ausgestaltet, dass sie den Ansaugunterdruck insbesondere beim Festlegen der Maximalleistung des Verbrennungsmotors berücksichtigt. Besonders vorteilhaft werden die oben genannten Größen mittels Sensoren ermittelt. Deren Signale oder Messergebnisse werden der Systemsteuerung, beispielsweise an der Schnittstelle, zugeführt. Vorzugsweise kann die Maximalleistung des Verbrennungsmotors besonders zuverlässig mittels einer oder mehrerer der oben genannten Größen festgelegt werden. Eine oder mehrere dieser Größen entsprechen in diesem Fall vorteilhafterweise dem wenigstens einen Parameter, mit dem die abgebbare Maximalleistung des Verbrennungsmotors festlegbar ist.

Besonders bevorzugt ist die Generatorsteuerung so ausgestaltet, dass eine von dem Generator zu erzeugende elektrische Generator-Ausgangsspannung in Abhängigkeit von einem vorgegebenen Generator-Maximalstrom und der Angabe über den Betriebszustand des Verbrennungsmotors einstellbar ist. Dadurch ist es vorteilhafterweise möglich, den Generator vor Beschädigungen durch einen überhöhten Generatorstrom zu schützen und gleichzeitig eine geeignete Generator-Ausgangsspannung, d. h. Ladespannung zum Laden des Energiespeichers, unter Berücksichtigung des Betriebszustandes des Verbrennungsmotors zuzulassen.

Gemäß einer weiteren vorteilhaften Ausführungsform der Erfindung weist die Generatorsteuerung eine Schnittstelle zum Empfangen eines Ladevorgabe-Eingangssignals auf. Dieses Ladevorgabe-Eingangssignal enthält eine Ladevorgabeinformation einer Energiespeicher-Ladesteuerung, die zum Steuern des Ladens des elektrischen Energiespeichers dient. Dabei ist die Generatorsteuerung so ausgestaltet, dass die von dem Generator zu erzeugende elektrische Generator-Ausgangsspannung in Abhängigkeit von dieser Ladevorgabeinformation einstellbar ist. Dadurch kann die Generatorsteuerung die Betriebsweise des Generators vorteilhafterweise sehr genau an die Anforderungen der Ladesteuerung und des Energiespeichers anpassen.

Bevorzugt ist die Angabe über den Betriebszustand des Verbrennungsmotors eine Angabe über eine Leistungsreserve des Verbrennungsmotors. Eine solche Angabe kann von der Generatorsteuerung vorteilhafterweise besonders gut und effizient dazu eingesetzt werden, den Generator abhängig vom verfügbaren Leistungsvermögen des Verbrennungsmotors optimal anzusteuern. Besonders vorteilhaft ist die Leistungsreserve abhängig von der zuvor festgelegten abgebbaren Maximalleistung des Verbrennungsmotors. Insbesondere ergibt sich die Leistungsreserve aus einer Differenz zwischen der zuvor festgelegten abgebbaren Maximalleistung und der aktuell abgerufenen Leistung des Verbrennungsmotors. Es ist vorzugsweise möglich, die Leistungsreserve auf Einspritzmengen eines Kraftstoffs zu beziehen, der zum Betreiben des Verbrennungsmotors eingesetzt wird. Vorzugsweise ergibt sich die Leistungsreserve in diesem Fall aus einer Differenz einer maximalen Einspritzmenge, die in die Brennkammern des Verbrennungsmotors einzuspritzen ist, um die festgelegte Maximalleistung des Verbrennungsmotors ausgeben zu können, und einer aktuellen Einspritzmenge, die aktuell in die Brennkammern eingespritzt wird, um die aktuell abgerufene Leistung des Verbrennungsmotors auszugeben. Die Generatorsteuerung ist vorteilhafterweise so ausgestaltet, dass der maximale Wert einer der Ausgangsgrößen des Generators, d. h. insbesondere dessen Ausgangsleistung oder Ausgangsspannung, abhängig von der Leistungsreserve des Verbrennungsmotors festlegbar ist.

Besonders vorteilhaft ist die Motorsteuerung so ausgestaltet, dass die Leistungsreserve als relative Leistungsreserve bezogen auf die festgelegte Maximalleistung des Verbrennungsmotors bestimmbar ist. Bei dieser Ausgestaltung der Erfindung kann die Generatorsteuerung so ausgestaltet sein, dass bei Bedarf so lange eine höhere Leistung vom Generator, und damit vom Verbrennungsmotor, ausgebbar ist, bis die relative Leistungsreserve des Verbrennungsmotors kleiner als ein vorgegebener erster Grenzwert, wie z. B. 5%, ist. Dadurch wird vorteilhafterweise sichergestellt, dass die vom Verbrennungsmotor abzugebende Ausgangsleistung bei Bedarf bis kurz vor die Grenze der Leistungsreserve gesteigert werden kann, ohne diese Grenze der Leistungsreserve tatsächlich zu erreichen. Es wird vorzugsweise ein geringer Sicherheitsbereich eingehalten.

In einer weiteren vorteilhaften Ausgestaltung ist die Generatorsteuerung so ausgestaltet, dass die Generator-Ausgangsleistung, und damit die vom Verbrennungsmotor ausgegebene Ausgangsleistung, reduzierbar ist, sobald die relative Leistungsreserve des Verbrennungsmotors kleiner als ein vorgegebener zweiter Grenzwert, wie z. B. 3%, ist, wobei der zweite Grenzwert kleiner als der erste Grenzwert ist. Dadurch wird vorteilhafterweise gewährleistet, dass die Grenze der Leistungsreserve des Verbrennungsmotors nicht überschritten werden kann. Der Sicherheitsbereich zur tatsächlichen Grenze der Leistungsreserve wird durch das Reduzieren der Ausgangsleistung des Verbrennungsmotors vergrößert.

Weitere vorteilhafte Ausführungsformen und Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Ausführungsbeispiels eines erfindungsgemäßen Fahrzeugs in Form von einem U-Boot, das ein erfindungsgemäßes Ladesystem aufweist, welches eine erfindungsgemäße Systemsteuerung enthält, und
- Fig. 2: eine schematische Darstellung eines Ablaufdiagramms eines Ausführungsbeispiels eines erfindungsgemäßen Verfahrens.

Im Folgenden werden, sofern nicht anders angegeben, für gleiche oder gleichwirkende Elemente gleiche Bezugszeichen verwendet.

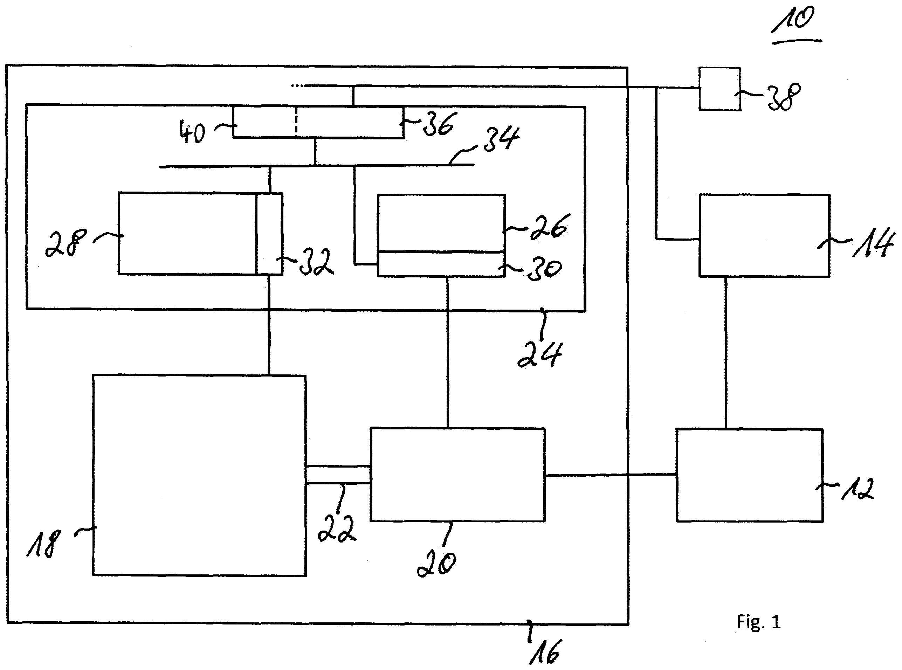

Fig. 1 zeigt eine schematische Darstellung eines Ausführungsbeispiels eines erfindungsgemäßen Fahrzeugs. Das Fahrzeug ist im vorliegenden Ausführungsbeispiel ein U-Boot 10. Die vorliegende Erfindung ist allerdings ebenso in anderen Fahrzeugen einsetzbar. Das U-Boot 10 enthält eine Batterie 12 als elektrischem Energiespeicher und eine Ladesteuerung 14, die mit der Batterie 12 verbunden ist. Die Batterie 12 dient zur Stromversorgung des U-Boots 10. Unter anderem dient die Batterie 12 zur Stromversorgung eines elektrischen Motors, mit dem das U-Boot 10 antreibbar ist. Die Ladesteuerung 14 dient zum Steuern der Batterie 12, insbesondere zum Steuern des Ladens der Batterie 12 mit elektrischer Energie.

Das U-Boot 10 weist ferner ein Ladesystem 16 auf, das zum Erzeugen von elektrischer Energie vorhanden ist, die in der Batterie 12 abspeicherbar ist. Das Ladesystem 16 enthält einen Verbrennungsmotor 18 und einen elektrischen Generator 20, der elektrisch mit der Batterie 12 verbunden ist. Der Verbrennungsmotor 18 ist im vorliegenden Ausführungsbeispiel ein Dieselmotor, der mit Dieselkraftstoff versorgt wird. Der Dieselkraftstoff ist in einem Tank gelagert. Der Verbrennungsmotor 18 weist eine Abtriebswelle 22 auf, die mechanisch mit dem Generator 20 verbunden ist. Der Generator 20 ist hier eine Synchronmaschine, deren Läufer auf der Abtriebswelle 22 sitzt. Im Betrieb des Ladesystems 16 dreht sich die Abtriebswelle 22 und treibt den Läufer des Generators 20 an. Durch das Drehen des Läufers des Generators 20 erzeugt dieser Strom, der der Batterie 12 über einen Gleichrichter zugeführt wird. Dadurch wird die Batterie 12 geladen.

Das Ladesystem 16 enthält ferner eine Systemsteuerung 24 zum Steuern des Ladesystems 16. Die Systemsteuerung 24 weist eine Generatorsteuerung 26 zum Steuern des Generators 20 und eine Motorsteuerung 28 zum Steuern des Verbrennungsmotors 18 auf. Die Generatorsteuerung 26 enthält eine Schnittstelle 30 zum Empfangen und Ausgeben von Signalen und die Motorsteuerung 28 eine Schnittstelle 32 zum Empfangen und Ausgeben von Signalen. Die Schnittstelle 32 ist mit dem Verbrennungsmotor 18, d. h. insbesondere einer Vielzahl von Komponenten des Verbrennungsmotors 18, wie z. B. Sensoren und Aktoren, sowie einem Bus 34 verbunden. Die Schnittstelle 30 ist mit dem Generator 20, d. h. insbesondere einer Vielzahl von Komponenten des Generators 20, wie z. B. Sensoren und Aktoren, sowie dem Bus 34 verbunden. Der Bus 34 ist eine Übertragungseinrichtung zum Übertragen von Nachrichten. Der Bus 34 verbindet im vorliegenden Ausführungsbeispiel vor allem die Motorsteuerung 28 mit der Generatorsteuerung 26, so dass die MotorSteuerung 28 der Generatorsteuerung 26 über den Bus 34 eine Nachricht zusenden kann, die eine Angabe über einen Betriebszustand des Verbrennungsmotors 18 enthält. Anstelle des Busses 34 kann auch eine andere Übertragungseinrichtung, wie z. B. ein Netzwerk oder bidirektionale Verbindungen zwischen den einzelnen Komponenten, im Ladesystem 16 vorgesehen sein.

Die Systemsteuerung 24 weist ferner eine Schnittstelle 36 auf, über die mit externen Komponenten Nachrichten, insbesondere Signale, ausgetauscht werden können. Die Schnittstelle 36 ist vorteilhafterweise mit einem Netzwerk innerhalb des U-Boots 10 verbunden, über das verschiedene Komponenten des U-Boots miteinander kommunizieren können. Insbesondere kann über die Schnittstelle 36 eine Fernsteuerung der Systemsteuerung 24 erfolgen.

Die Systemsteuerung 24 ist über die Schnittstelle 36 vorteilhafterweise mit einer Vielzahl von Sensoren, Aktoren und weiteren Steuerungen des U-Boots 10 verbunden. Fig. 1 zeigt stellvertretend für diese Vielzahl von Sensoren, Aktoren und weiteren Steuerungen einen Sensor 38, der im Ausführungsbeispiel innerhalb des U-Boots 10 angeordnet ist. Der Sensor 38 ist hier ein Temperatursensor zum Erfassen der Temperatur des Seewassers, in dem das U-Boot 10 schwimmt. Der Sensor 38 ist unmittelbar an einem Wassereinlass platziert, an dem Seewasser, beispielsweise zum Kühlen, kontrolliert in das U-Boot 10 eingelassen werden kann. Es ist allerdings ebenso möglich, Sensoren an einer anderen Stelle im U-Boot 10, insbesondere an der Außenseite des U-Boots 10 anzubringen. Von solchen Steuerungen und/oder Sensoren können der Systemsteuerung 24 insbesondere Messgrößen und/oder Rechenwerte, etc. zugeleitet werden, die innerhalb der Systemsteuerung 24 zur weiteren Verarbeitung an die Motorsteuerung 28 und/oder die Generatorsteuerung 26 verteilt werden. Solche Messgrößen und/oder Rechenwerte, etc. stellen vorgegebene Parameter dar, die insbesondere von der Motorsteuerung 28 dazu eingesetzt werden, den Betriebszustand des Verbrennungsmotors 18 zu ermitteln. Besonders vorteilhaft werden solche Messgrößen und/oder Rechenwerte, etc. von der Motorsteuerung 28 dazu verwendet, eine Maximalleistung des Verbrennungsmotors 18 festzulegen. Diese festgelegte Maximalleistung soll der Verbrennungsmotor 18 in Abhängigkeit von den vorgegebenen Parametern, d. h. insbesondere den Messgrößen und/oder Rechenwerten, etc., maximal abgeben. Das bedeutet, dass die Maximalleistung des Verbrennungsmotors 18 abhängig von wenigstens einem der vorgegebenen Parametern vorteilhafterweise veränderlich festlegbar ist. Die Maximalleistung, oder eine aus ihr abgeleitete andere Zustandsgröße, dienen der Motorsteuerung 28 vorzugsweise dazu, den Betriebszustand des Verbrennungsmotors 18 zu ermitteln oder festzulegen. Vorteilhafterweise ist der Betriebszustand somit ebenfalls abhängig von wenigstens einem der vorgegebenen Parameter veränderlich.

Die Motorsteuerung ist so ausgestaltet, dass sie die Maximalleistung des Verbrennungsmotors 18 abhängig von Messgrößen und/oder Rechenwerten, etc. festlegen kann. Solche Messgrößen und/oder Rechenwerte, etc. ergeben sich besonders vorteilhaft aus Umweltbedingungen der das U-Boot 10 umgebenden Umwelt, insbesondere aus Bedingungen oder Gegebenheiten von Elementen oder Medien, die das U-Boot 10 umgeben und zum Betrieb des U-Boots 10 oder einer seiner Komponenten eingesetzt werden. Beispiele für solche Elemente oder Medien sind die Luft, die sich oberhalb des Wassers befindet, in dem das U-Boot 10 schwimmt, und das Seewasser, das das U-Boot 10 umgibt. Ein Beispiel für eine solche Messgröße und/oder einen solchen Rechenwert ist die Temperatur von Luft, die beim Verbrennen des Kraftstoffs im Verbrennungsmotor 18 eingesetzt wird. Diese Lufttemperatur wird mittels eines Sensors gemessen. Die Luft wird über einen nach oben aus dem Wasser ragenden Schnorchel ins Innere des U-Boots 10 angesaugt. Dabei kann ein Unterdruck auftreten, der für die Betriebsweise des Verbrennungsmotors 18 relevant ist. Je geringer der Druck ist, umso schlechter ist dies für den Verbrennungsmotor 18. Der Ansaugunterdruck entsteht insbesondere dann, wenn die obere Öffnung des Schnorchels unter Wasser kommt, beispielsweise bei starkem Wellengang, und die Öffnung des Schnorchels schließt. Der Ansaugunterdruck wird gemessen, oder anderweitig ermittelt, und der Motorsteuerung zum Festlegen der Maximalleistung des Verbrennungsmotors 18 mitgeteilt. Eine weitere Messgröße zum Festlegen der Maximalleistung ist die Wassertemperatur von zum Kühlen des Verbrennungsmotors 18 eingesetztem Kühlwasser. Im vorliegenden Fall ist das Kühlwasser das das U-Boot 10 umgebende Seewasser. Die Temperatur des Seewassers wird gemessen, und das sich ergebende Messsignal an die Motorsteuerung weitergeleitet. Eine weitere Messgröße, die durch einen Sensor ermittelt und von der Motorsteuerung 28 zum Festlegen der Maximalleistung des Verbrennungsmotors 18 eingesetzt wird, ist der Abgasgegendruck. Der Abgasgegendruck entspricht im Wesentlichen demjenigen Druck, der dem Abgas beim Ausgeben aus dem U-Boot entgegensteht. Diese Größe des Abgasgegendrucks ist für die vorliegende Anwendung im U-Boot besonders relevant, da der Abgasgegendruck besonders hoch ist und stark schwanken kann. Der Verbrennungsmotor 18 ist hier in geeigneter Weise für solch hohe Abgasgegendrücke ausgelegt.

Dadurch, dass die maximale Ausgangsleistung des Verbrennungsmotors 18 vorteilhafterweise abhängig von den vorgegebenen Parametern variiert werden kann, ist sie nicht auf eine einmalig festgelegte Nennleistung des Verbrennungsmotors 18 begrenzt. Vielmehr kann die festgelegte Maximalleistung insbesondere dann größer als die Nennleistung festgelegt werden, wenn die Messgrößen und/oder Rechenwerte, etc. als vorgegebene Parameter günstige Werte haben. Das ist beispielsweise der Fall, wenn die Wassertemperatur des Kühlwassers niedrig ist. Das Kühlwasser ist dann in der Lage, eine bei höherer Leistungsabgabe des Verbrennungsmotors 18 sich entwickelnde höhere Wärme besser abzuführen. Das ist beispielsweise ebenfalls so, wenn der Abgasgegendruck niedrig ist. Bei höherer Leistungsabgabe des Verbrennungsmotors 18 entsteht mehr Abgas, das nach außerhalb des U-Boots 10 ausgegeben werden muss. Ist der Abgasgegendruck in geeigneter Weise niedrig, lässt sich die größere Menge Abgas einfacher ausgeben. Im umgekehrten Fall von ungünstigen Messgrößen und/oder Rechenwerte, etc. als vorgegebenen Parametern kann die Maximalleistung vorteilhafterweise niedriger als die Nennleistung festgelegt werden. Das Ladesystem 16 ist somit auch bei ungünstigen Umweltbedingungen, wenn auch mit niedrigerer Leistungsfähigkeit, in der Lage Ladeenergie zum Laden der Batterie 12 zur Verfügung zu stellen.

Besonders vorteilhaft ist die Motorsteuerung 28 so ausgestaltet, dass sie eine Leistungsreserve des Verbrennungsmotors 18 bestimmt. Diese Leistungsreserve ergibt sich aus der Differenz der festgelegten Maximalleistung und der momentan vom Verbrennungsmotor 18 abgerufenen Ausgangsleistung. Die Leistungsreserve kann von der Motorsteuerung vorzugsweise als relative Leistungsreserve bezogen auf die festgelegte Maximalleistung bestimmt werden.

Die Schnittstelle 36 enthält im vorliegenden Ausführungsbeispiel des Weiteren eine lokale Eingabeeinheit in Form von einer Tastatur 40, über die von einem externen Bediener der Systemsteuerung 24 Steuerungsvorgaben zum Steuern des Ladesystems 16 eingebbar sind. Vorteilhafterweise ist eine solche Steuerungsvorgabe ein vorgegebener Parameter, mit dem die festgelegte Maximalleistung des Verbrennungsmotors 18 anforderbar ist. Die Systemsteuerung 24 ist vorteilhafterweise so ausgestaltet, dass sie ein Anforderungssignal zum Anfordern der festgelegten Maximalleistung des Verbrennungsmotors 18 erzeugt, sofern sie die Eingabe einer entsprechenden Steuerungsvorgabe, beispielsweise über die Tastatur 40 oder mittels Fernsteuerung über die Schnittstelle 36, feststellt. Der Betrieb des Ladesystems 16 mit der angeforderten Maximalleistung des Verbrennungsmotors 18 wird im Ausführungsbeispiel als Verstärkungsmodus bezeichnet. Der Begriff Verstärkungsmodus gilt sowohl in dem Fall, in dem der Verbrennungsmotor 18 mit einer festgelegten Maximalleistung betrieben wird, die höher ist als die Nennleistung, als auch in dem Fall, in dem die festgelegte Maximalleistung niedriger ist als die Nennleistung.

Die Ladesteuerung 14 ist über die Schnittstelle 36 mit der Systemsteuerung 24 verbunden. Über den Bus 34 ist es der Ladesteuerung 14 möglich, mit der Generatorsteuerung 26 zu kommunizieren. Vor allem kann die Ladesteuerung 14 der Generatorsteuerung 26 über diese Verbindung eine Vorgabe für eine zur Verfügung zu stellende Generator-Ausgangsspannung und/oder Ausgangsleistung zum Laden der Batterie 12 übermitteln. Alternativ oder zusätzlich kann die Ladesteuerung 14 zur Übermittlung von Nachrichten direkt mit der Schnittstelle 30 der Generatorsteuerung 26 verbunden sein.

Die Generatorsteuerung 26 ist hier vorteilhafterweise so ausgestaltet, dass sie eine von dem Generator 20 zu erzeugende Generator-Ausgangsgröße, insbesondere die Generator-Ausgangsspannung oder die Generator-Ausgangsleistung, abhängig von dem von der Motorsteuerung 28 festgelegten und/oder ermittelten Betriebszustand des Verbrennungsmotors 18 bestimmt. Dazu wird von der Motorsteuerung 28 eine Nachricht erzeugt, die eine Angabe über den Betriebszustand enthält. Diese Nachricht wird der Generatorsteuerung 26 über den Bus 34 zugesendet. Im vorliegenden Ausführungsbeispiel bestimmt die Generatorsteuerung 26 die Generator-Ausgangsgröße zusätzlich in Abhängigkeit von einem vorgegebenen maximalen Generator-Ausgangsstrom. Dieser maximale Generator-Ausgangsstrom ist insbesondere durch den Aufbau des Generators 20 bestimmt.

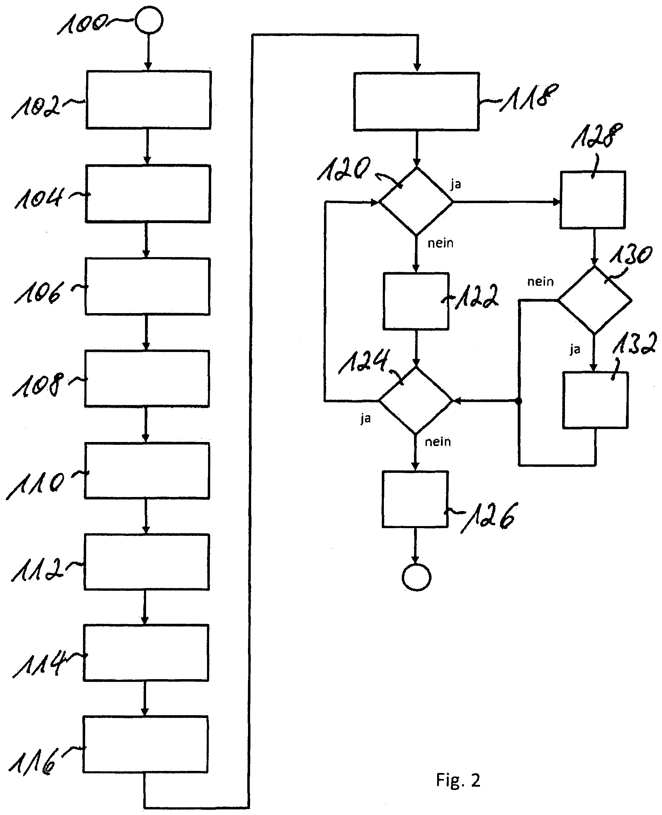

Die Fig. 2 zeigt eine schematische Darstellung eines Ablaufdiagramms eines Ausführungsbeispiels des erfindungsgemäßen Verfahrens zum Steuern des Ladesystems 16. Anhand des Ausführungsbeispiels des erfindungsgemäßen Verfahrens werden u. a. die Betriebsweisen und Funktionalitäten des erfindungsgemäßen U-Boots 10 und des Ladesystems 16 sowie der erfindungsgemäßen Systemsteuerung 24 näher beschrieben. Vor allem werden die Funktionalitäten der Motorsteuerung 28 und der Generatorsteuerung 26 erläutert.

In einem Schritt 100 beginnt das vorliegende Ausführungsbeispiel des erfindungsgemäßen Verfahrens. Die Ladesteuerung 14 übermittelt in einem Schritt 102 eine Spannungsanforderung zum Laden der Batterie 12 über die Schnittstelle 36 und den Bus 34 an die Generatorsteuerung 26. In einem Schritt 104 empfängt die Generatorsteuerung 26 die Spannungsanforderung der Ladesteuerung 14 an ihrer Schnittstelle 30 und steuert den Generator 20 so an, dass dieser die geforderte Ausgangsspannung erzeugt und an seinem Ausgang ausgibt. Dabei überwacht die Generatorsteuerung 26 den Generator 20, so dass der maximale Generatorstrom nicht überschritten wird. Zum Erzeugen der geforderten Generator-Ausgangsleistung benötigt der Generator 20 eine geeignete Ausgangsleistung des Verbrennungsmotors 18, durch den der Läufer des Generators 20 angetrieben wird.

Die Generatorsteuerung 26 übermittelt daher in einem Schritt 106 eine Nachricht mit einer Angabe für eine Ausgangsleistung, die von dem Verbrennungsmotor 18 angefordert wird, an die Motorsteuerung 28. In einem Schritt 108 steuert die Motorsteuerung 28 den Verbrennungsmotor 18 so, dass er die angeforderte Ausgangsleistung zur Verfügung stellt. Dabei steuert die Motorsteuerung 28 den Verbrennungsmotor 18 so, dass er maximal die festgelegte Nennleistung abgibt. Sofern die von der Generatorsteuerung 26 angeforderte Ausgangsleistung die Nennleistung des Verbrennungsmotors 18 überschreitet, wird vom Verbrennungsmotor 18 dennoch maximal die Nennleistung geliefert. Sollte die vom Verbrennungsmotor 18 erzeugte Nennleistung dem Generator 20 nicht ausreichen, die angeforderte Ausgangsleistung zu erzeugen, so wird die von der Ladesteuerung 14 übermittelte Anforderung vom Generator 20 zumindest teilweise nicht erfüllt. Die Batterie 12 wird somit langsamer aufgeladen, als von der Ladesteuerung 14 gefordert.

In einem Schritt 110 wird von dem Bediener der Systemsteuerung 24 an der Tastatur 40 oder über die Schnittstelle 36 die Steuerungsvorgabe eingegeben, dass das Ladesystem 16 in den Verstärkungsmodus übergehen soll. Dies bedeutet, dass die maximale Ausgangsleistung des Verbrennungsmotors 18 nunmehr abhängig von vorgegebenen Parametern, insbesondere bestimmten Umweltbedingungen, festgelegt wird. Die Systemsteuerung 24 erzeugt daraufhin ein Anforderungssignal zum Anfordern der Maximalleistung des Verbrennungsmotors 18. Das Anforderungssignal wird anschließend in einem Schritt 112 an die Motorsteuerung 28 und die Generatorsteuerung 26 übermittelt. In einem Schritt 114 werden beispielsweise mittels Sensoren und ggf. anderen Erfassungsmitteln zum Erfassen von Umweltbedingungen Messgrößen und/oder Rechenwerte, etc. als vorgegebene Parameter erfasst und an die Motorsteuerung 28 übermittelt. In einem Schritt 116 legt die Motorsteuerung 28 die Maximalleistung des Verbrennungsmotors 18 fest, die von den übermittelten vorgegebenen Parametern, insbesondere den Messgrößen und/oder Rechenwerte, etc. abhängt. Ferner bestimmt die Motorsteuerung 28 die relative Leistungsreserve des Verbrennungsmotors 28, wobei die Leistungsreserve von der festgelegten Maximalleistung abhängt. Vorzugsweise stellt die Motorsteuerung des Weiteren eine Verstärkungskennlinie für den Betrieb des Verbrennungsmotors 18 im Verstärkungsmodus ein. In einem Schritt 118 erzeugt die Motorsteuerung 28 eine Nachricht, die eine Angabe über die Leistungsreserve enthält. Die Leistungsreserve entspricht dabei einem Betriebszustand des Verbrennungsmotors 18. Anschließend sendet die Motorsteuerung 28 die Nachricht mit der Angabe der zuvor bestimmten relativen Leistungsreserve über den Bus 34 an die Generatorsteuerung 26.

In einem Schritt 120 überprüft die Generatorsteuerung 26, ob die von der Motorsteuerung 28 gesendete Leistungsreserve kleiner als ein erster Grenzwert ist. Ist das nicht der Fall, dann wird der Generatorsteuerung 26 in einem Schritt 122 gestattet, die Ausgangsleistung des Generators 20 bei Bedarf, d. h. insbesondere abhängig von der Anforderung der Ladesteuerung 14, zu erhöhen. In einem Schritt 124 wird daraufhin überprüft, ob weiterhin der Verstärkungsmodus angefordert wird. Ist dies nicht der Fall, so verzweigt das Verfahren gemäß vorliegendem Ausführungsbeispiel zu einem Schritt 126, in dem die Motorsteuerung die maximale Ausgangsleistung des Verbrennungsmotors 18 auf die Nennleistung festlegt. Als Kennlinie für den Betrieb des Verbrennungsmotors 18 wird die Nennbetriebskennlinie eingesetzt. Wird bei der Abfrage in Schritt 124 festgestellt, dass der Verstärkungsmodus weiterhin angefordert wird, so verzweigt das Verfahren zurück zum Schritt 120, in dem erneut überprüft wird, ob die übermittelte Leistungsreserve kleiner ist als der erste Grenzwert.

Wird in dem Schritt 120 festgestellt, dass die übermittelte Leistungsreserve kleiner als der erste Grenzwert ist, dann wird in einem Schritt 128 die Ausgangsleistung des Generators 20 konstant gehalten. Eine weitere Steigerung der Generator-Ausgangsleistung wird auch dann nicht gestattet, wenn aufgrund der Anforderung der Ladesteuerung 14 eine höhere Ausgangsleistung des Generators 20 benötigt wird. In einem Schritt 130 wird anschließend abgefragt, ob die Leistungsreserve kleiner als ein zweiter Grenzwert ist. Der zweite Grenzwert ist dabei kleiner als der erste Grenzwert. Ist die Leistungsreserve nicht kleiner als der zweite Grenzwert, so verzweigt das Verfahren zum Schritt 124. Ist die Leistungsreserve kleiner als der zweite Grenzwert, dann folgt ein Schritt 132, in dem die Ausgangsleistung des Generators 20 reduziert wird. Anschießend fährt das Verfahren mit Schritt 124 fort.

## Patentansprüche

1. Systemsteuerung (14) zum Steuern eines Ladesystems (16), das zum Laden eines elektrischen Energiespeichers (12) vorgesehen ist und einen elektrischen Generator (20) und einen Verbrennungsmotor (18) aufweist, der mechanisch mit dem Generator (20) verbunden ist, mit
- einer Generatorsteuerung (26) zum Steuern des Generators (20),
- einer Motorsteuerung (28) zum Steuern des Verbrennungsmotors (18),
- einer Übertragungseinrichtung (34) zum Übertragen von Nachrichten, wobei die Motorsteuerung (28) mittels der Übertragungseinrichtung (34) mit der Generatorsteuerung (26) verbunden ist,
- die Motorsteuerung (28) so ausgestaltet ist, dass eine Nachricht erzeugbar ist, die eine Angabe über einen Betriebszustand des Verbrennungsmotors (18) enthält, und diese Nachricht der Generatorsteuerung (26) über die Übertragungseinrichtung (34) zusendbar ist,
- die Motorsteuerung (28) ferner so ausgestaltet ist, dass eine abgebbare Maximalleistung des Verbrennungsmotors (18) in Abhängigkeit von wenigstens einem vorgegebenen Parameter veränderlich festlegbar ist, die Angabe über den Betriebszustand des Verbrennungsmotors (18) von dieser Maximalleistung des Verbrennungsmotors (18) abhängt und
- die Motorsteuerung (28) so ausgestaltet ist, dass die Maximalleistung des Verbrennungsmotors (18) in Abhängigkeit von dem wenigstens einen vorgegebenen Parameter so festlegbar ist, dass sie größer ist, als eine für den Verbrennungsmotor (18) festgelegte Nennleistung.

2. Systemsteuerung nach Anspruch 1, **dadurch gekennzeichnet, dass** die Systemsteuerung (14) eine Schnittstelle (36, 40) zum Empfangen von externen Steuerungsvorgaben aufweist und der wenigstens eine vorgegebene Parameter ein Anforderungssignal zum Anfordern der Maximalleistung des Verbrennungsmotors (18) umfasst, wobei die Systemsteuerung (14) so ausgestaltet ist, dass sie das Anforderungssignal aufgrund einer von ihr empfangenen Steuerungsvorgabe, insbesondere eines externen Bedieners der Systemsteuerung (14), erzeugt.

3. Systemsteuerung nach einem der vorhergehenden Ansprüche, **dadurch gekennzeichnet, dass** die Angabe über den Betriebszustand des Verbrennungsmotors (18) von wenigstens einer der folgenden Größen abhängig ist: einer Lufttemperatur von zum Betreiben des Verbrennungsmotors (18) angesaugter Luft; einer Wassertemperatur von zum Kühlen des Verbrennungsmotors (18) eingesetztem Kühlwasser; einem Abgasgegendruck, der beim Ausgeben von Abgas auftritt, das beim Betreiben des Verbrennungsmotors (18) entsteht; einem Ansaugunterdruck, der beim Ansaugen von Luft auftritt.

4. Systemsteuerung nach einem der vorhergehenden Ansprüche, **dadurch gekennzeichnet, dass** die Generatorsteuerung (26) so ausgestaltet ist, dass eine von dem Generator (20) zu erzeugende elektrische Generator-Ausgangsspannung in Abhängigkeit von einem vorgegebenen Generator-Maximalstrom und der Angabe über den Betriebszustand des Verbrennungsmotors (18) einstellbar ist.

5. Systemsteuerung nach einem der vorhergehenden Ansprüche, **dadurch gekennzeichnet, dass** die Angabe über den Betriebszustand des Verbrennungsmotors (18) eine Angabe über eine Leistungsreserve des Verbrennungsmotors (18) enthält.

6. Ladesystem (16) zum Laden eines elektrischen Energiespeichers (12) mit einem elektrischen Generator (20) und einem Verbrennungsmotor (18), der mechanisch mit dem Generator (20) verbunden ist, und mit einer Systemsteuerung (14) nach einem der vorhergehenden Ansprüche.

7. Fahrzeug (10) mit einem elektrischen Energiespeicher (12) und einem Ladesystem (16) nach Anspruch 6.

8. Fahrzeug nach Anspruch 7, **dadurch gekennzeichnet, dass** es ein Wasserfahrzeug (10) ist.

9. Verfahren zum Steuern eines Ladesystems (16), das zum Laden eines elektrischen Energiespeichers (12) vorgesehen ist und einen elektrischen Generator (20) und einen Verbrennungsmotor (18) aufweist, der mechanisch mit dem Generator (20) verbunden ist, und bei dem Verfahren
- der Generator (20) mittels einer Generatorsteuerung (26) gesteuert wird,
- der Verbrennungsmotor (18) mittels einer Motorsteuerung (28) gesteuert wird,
- von der Motorsteuerung (28) eine Nachricht erzeugt wird, die eine Angabe über einen Betriebszustand des Verbrennungsmotors (18) enthält, und diese Nachricht der Generatorsteuerung (26) über eine Übertragungseinrichtung (34) zum Übertragen von Nachrichten, die die Motorsteuerung (28) mit der Generatorsteuerung (26) verbindet, zugesendet wird,
- die Motorsteuerung (28) eine abgebbare Maximalleistung des Verbrennungsmotors (18) in Abhängigkeit von wenigstens einem vorgegebenen Parameter veränderlich festlegt, und die Angabe über den Betriebszustand des Verbrennungsmotors (18) von dieser Maximalleistung des Verbrennungsmotors (18) abhängt, und
- die Motorsteuerung (28) so ausgestaltet ist, dass die Maximalleistung des Verbrennungsmotors (18) in Abhängigkeit von dem wenigstens einen vorgegebenen Parameter so festlegbar ist, dass sie größer ist, als eine für den Verbrennungsmotor (18) festgelegte Nennleistung.

## Claims

1. System controller (14) for controlling a charging system (16) which is provided for charging an electrical energy store (12), and an electrical generator (20) and an internal combustion engine (18) which is mechanically connected to the generator (20), having
- a generator controller (26) for controlling the generator (20),
- an engine controller (28) for controlling the internal combustion engine (18),
- a transmission device (34) for transmitting messages, wherein the engine controller (28) is connected to the generator controller (26) by means of the transmission device (34),
- the engine controller (28) is configured in such a way that a message can be generated which contains an indication of an operating state of the internal combustion engine (18), and this message can be sent to the generator controller (26) via the transmission device (34),
- the engine controller (28) is also configured in such a way that a maximum power level of the internal combustion engine (18) which can be output can be defined in a variable fashion as a function of at least one predefined parameter, the indication of the operation state of the internal combustion engine (18) depending on this maximum power level of the internal combustion engine (18), and
- the engine controller (28) is configured in such a way that the maximum power level of the internal combustion engine (18) can be defined as a function of the at least one predefined parameter in such a way that said maximum power level is higher than a rated power level which is defined for the internal combustion engine (18).

2. System controller according to Claim 1, **characterized in that** the system controller (14) has an interface (36, 40) for receiving external control prescriptions, and the at least one predefined parameter comprises a request signal for requesting the maximum power level of the internal combustion engine (18), wherein the system controller (14) is configured in such a way that it generates the request signal on the basis of a control prescription which it has received, in particular on the basis of an external operator of the system controller (14).

3. System controller according to one of the preceding claims, **characterized in that** the indication of the operating state of the internal combustion engine (18) is dependent on at least one of the following variables: an air temperature of air sucked in for operating the internal combustion engine (18); a water temperature of cooling water used to cool the internal combustion engine (18); an exhaust gas counterpressure which occurs when exhaust gas is output and which is produced when the internal combustion engine (18) is operating; an intake underpressure which occurs when air is sucked in.

4. System controller according to one of the preceding claims, **characterized in that** the generator controller (26) is configured in such a way that an electrical generator output voltage which is generated by the generator (20) can be set as a function of a predefined generator maximum current and the indication of the operating state of the internal combustion engine (18).

5. System controller according to one of the preceding claims, **characterized in that** the indication of the operating state of the internal combustion engine (18) contains an indication of a power reserve of the internal combustion engine (18).

6. Charging system (16) for charging an electrical energy store (12) with an electrical generator (20) and an internal combustion engine (18) which is mechanically connected to the generator (20), and with a system controller (14) according to one of the preceding claims.

7. Vehicle (10) having an electrical energy store (12) and a charging system (16) according to Claim 6.

8. Vehicle according to Claim 7, **characterized in that** said vehicle is a watercraft (10).

9. Method for controlling a charging system (16) which is provided for charging an electrical energy store (12), and an electrical generator (20) and an internal combustion engine (18) which is mechanically connected to the generator (20), and in the method
- the generator (20) is controlled by means of a generator controller (26),
- the internal combustion engine (18) is controlled by means of an engine controller (28),
- a message which contains an indication of an operating state of the internal combustion engine (18) is generated by the engine controller (28), and this message is sent to the generator controller (26) via a transmission device (34) for transmitting messages, which transmission device (34) connects the engine controller (28) to the generator controller (26),
- the engine controller (28) defines in a variable fashion a maximum power level of the internal combustion engine (18) which can be output, as a function of at least one predefined parameter, and the indication of the operating state of the internal combustion engine (18) depends on this maximum power level of the internal combustion engine (18), and
- the engine controller (28) is configured in such a way that the maximum power level of the internal combustion engine (18) can be defined as a function of the at least one predefined parameter in such a way that it is higher than a rated power level which is defined for the internal combustion engine (18).

## Revendications

1. Unité de commande de système (14) destinée à commander un système de charge (16) qui est prévu pour charger un accumulateur d'énergie électrique (12) et comporte un générateur électrique (20) et un moteur à combustion interne (18) mécaniquement relié au générateur (20), comportant
- une unité de commande de générateur (26) destinée à commander le générateur (20),
- une unité de commande de moteur (28) destinée à commander le moteur à combustion interne (18),
- un dispositif de transmission (34) destiné à transmettre des messages, dans lequel l'unité de commande de moteur (28) est reliée au moyen du dispositif de transmission (34) à l'unité de commande de générateur (26),
- l'unité de commande de moteur (28) est conçue de manière à ce qu'un message qui contient une indication concernant un état de fonctionnement du moteur à combustion interne (18) puisse être généré, et dans lequel ledit message peut être envoyé à l'unité de commande de générateur (26) par l'intermédiaire du dispositif de transmission (34),
- l'unité de commande de moteur (28) est en outre conçue de manière à ce qu'une puissance maximale pouvant être délivrée par le moteur à combustion interne (18) puisse être fixée de manière variable en fonction d'au moins un paramètre prédéterminé, l'indication concernant l'état de fonctionnement du moteur à combustion interne (18) dépendant de ladite puissance maximale du moteur à combustion interne (18) et
- l'unité de commande de moteur (28) est conçue de manière à ce que la puissance maximale du moteur à combustion interne (18) soit fixée en fonction de l'au moins un paramètre prédéterminé afin qu'elle soit supérieure à une puissance nominale fixée pour le moteur à combustion interne (18).

2. Unité de commande de système selon la revendication 1, **caractérisée en ce que** l'unité de commande de système (14) comporte une interface (36, 40) destinée à recevoir des consignes de commande externes et **en ce que** l'au moins un paramètre prédéterminé comprend un signal de demande destiné à demander la puissance maximale du moteur à combustion interne (18), dans lequel l'unité de commande de système (14) est conçue de manière à ce qu'elle génère le signal de demande sur la base d'une consigne de commande reçue par elle, notamment en provenance d'un opérateur externe de l'unité de commande de système (14).

3. Unité de commande de système selon l'une quelconque des revendications précédentes, **caractérisée en ce que** l'indication concernant l'état de fonctionnement du moteur à combustion interne (18) dépend d'au moins l'une des grandeurs suivantes : d'une température d'air de l'air admis pour le fonctionnement du moteur à combustion interne (18) ; d'une température d'eau de l'eau de refroidissement utilisée pour le refroidissement du moteur à combustion interne (18) ; d'une contre-pression des gaz d'échappement qui se produit lors de l'émission de gaz d'échappement et qui apparaît lors du fonctionnement du moteur à combustion interne (18) ; d'une dépression d'admission qui se produit lors de l'admission d'air.

4. Unité de commande de système selon l'une quelconque des revendications précédentes, **caractérisée en ce que** l'unité de commande de générateur (26) est conçue de manière à ce qu'une tension de sortie électrique du générateur, qui doit être générée par le générateur (20), soit réglable en fonction d'un courant maximal prédéterminé de générateur et de l'indication concernant l'état de fonctionnement du moteur à combustion interne (18).

5. Unité de commande de système selon l'une quelconque des revendications précédentes, **caractérisée en ce que** l'indication concernant l'état de fonctionnement du moteur à combustion interne (18) contient une indication concernant une réserve de puissance du moteur à combustion interne (18).

6. Système de charge (16) destiné à charger un accumulateur d'énergie électrique (12) comportant un générateur électrique (20) et un moteur à combustion interne (18) qui est mécaniquement relié au générateur (20), et comportant une unité de commande de système (14) selon l'une quelconque des revendications précédentes.

7. Véhicule (10) comportant un accumulateur d'énergie électrique (12) et un système de charge (16) selon la revendication 6.

8. Véhicule selon la revendication 7, **caractérisé en ce qu'**il s'agit d'une embarcation (10).

9. Procédé destiné à commander un système de charge (16) qui est prévu pour charger un accumulateur d'énergie électrique (12) et comporte un générateur électrique (20) et un moteur à combustion interne (18) mécaniquement relié au générateur (20), procédé dans lequel
- le générateur (20) est commandé au moyen d'une unité de commande de générateur (26),
- le moteur à combustion interne (18) est commandé au moyen d'une unité de commande de moteur (28),
- un message est généré par l'unité de commande de moteur (28), lequel message contient une indication concernant un état de fonctionnement du moteur à combustion interne (18), et dans lequel ledit message est envoyé par l'unité de commande de générateur (26) par l'intermédiaire d'un dispositif de transmission (34) destiné à transmettre des messages, qui relie l'unité de commande de moteur (28) à l'unité de commande de générateur (26),
- l'unité de commande de moteur (28) fixe de manière variable une puissance maximale pouvant être délivrée par le moteur à combustion interne (18) en fonction d'au moins un paramètre prédéterminé, et l'indication concernant l'état de fonctionnement du moteur à combustion interne (18) dépend de ladite puissance maximale du moteur à combustion interne (18), et
- l'unité de commande de moteur (28) est conçue de manière à ce que la puissance maximale du moteur à combustion interne (18) soit fixée en fonction de l'au moins un paramètre prédéterminé afin qu'elle soit supérieure à une puissance nominale fixée pour le moteur à combustion interne (18).
